# FASCICULE DE BREVET EUROPEEN

(11) **EP 0 538 125 B1**
(45) Date de publication et mention de la délivrance du brevet: **30.07.1997**
(21) Numéro de dépôt: 92402810.3
(22) Date de dépôt: 14.10.1992
(51) Int. Cl.: A23L 1/217

(54) **Procédé de préparation de morceaux croustillants reconstitués de pommes de terre et produits alimentaires obtenus selon ce procédé**
Verfahren zur Zubereitung von knusprigen wiederhergestellten Stücken von Kartoffeln und gemäss diesem Verfahren erhaltene Nahrungsmittelprodukte
Process for the preparation of crisp reconstituted pieces of potatoes and food products obtained according to this process

(30) Priorité: 16.10.1991 FR 9112773
(43) Date de publication de la demande: 21.04.1993
(73) Titulaire: SOCIETE DE DEVELOPPEMENT INDUSTRIEL AGRO ALIMENTAIRE, F-02290 Vic sur Aisne (FR)
(72) Inventeur: Tricoit, Jean, F-02200 Soissons (FR)
(74) Mandataire: Lanceplaine, Jean-Claude

(56) Documents cités:
- EP-A- 0 299 755
- PATENT ABSTRACTS OF JAPAN vol. 15, no. 282 (C-850)(4810) 17 Juillet 1991
- PATENT ABSTRACTS OF JAPAN vol. 10, no. 13 (C-323)(2070) 18 Janvier 1986

## Description

La présente invention a pour objet un procédé de préparation de morceaux croustillants reconstitués de pommes de terre.

La présente invention couvre également les produits alimentaires préparés selon ce procédé.

On connaît des procédés de préparation de produits alimentaires à base de pommes de terre, appelés "chips", qui consistent tout d'abord à laver les pommes de terre, à les éplucher, à les découper en fines lamelles ayant une épaisseur d'environ 1,5 mm, puis à les blanchir et à frire les lamelles blanchies dans un bain d'huile pour réaliser un produit possédant la propriété d'être croustillant.

Une des difficultés pour réaliser ce type de produits réside dans la qualité des pommes de terre pour obtenir des produits présentant une qualité constante tout au long de l'année.

En effet, toutes les variétés de pommes de terre ne peuvent pas être frittes et tous les terrains ne produisent pas les mêmes qualités de pommes de terre.

De plus, à une certaine période de l'année, les pommes de terre peuvent comporter des points noirs ou des taches brunâtres dûs par exemple à leur conservation.

Une autre difficulté réside dans la différence de grosseur des pommes de terre qui oblige à un tri préalable et pose des problèmes au moment du conditionnement automatique à cause des inégalités de volume et de poids des tranches après la friture.

On connaît dans le brevet JP-A-30 98 548 un procédé de préparation de produits alimentaires à base de pommes de terre et notamment des "chips", dans lequel on prépare une pâte contenant des flocons de pommes de terre et de l'amidon, on lamine la pâte obtenue, on forme des morceaux, on rôtit et on effectue une friture desdits morceaux.

La présente invention a pour but de proposer un nouveau procédé industriel de préparation qui permet d'obtenir un produit alimentaire à base de pommes de terre de meilleure qualité.

Le procédé selon l'invention consiste :
- à préparer une pâte possédant un taux d'humidité résiduel compris entre 60 et 75% en mélangeant, de la purée fraîche de pommes de terre dont la température est de l'ordre de 80°C et dans une proportion comprise entre 80 et 85%, des flocons ou des brisures de flocons de pommes de terre dans une proportion comprise entre 10 et 15%, de l'amidon dans une proportion comprise entre 5 et 10% et des additifs tels que du sel soluble alimentaire,
- à extruder la pâte obtenue pour améliorer son homogénéité,
- à laminer ladite pâte pour former au moins une bande continue d'épaisseur comprise entre 0,5 et 5 mm selon la texture désirée du produit final,
- à former à partir de ladite bande de pâte des morceaux de formes géométriques quelconques par écrasement provoquant le soudage des bords desdits morceaux,
- à récupérer et à recycler les chutes de ladite bande de pâte,
- et à effectuer une friture des morceaux à une température comprise entre 160°C et 220°C et pendant une durée comprise entre 15 secondes et 1 minute pour obtenir des morceaux frits dont le taux d'humidité résiduel est inférieur à 2%.

Selon d'autres caractéristiques de l'invention :
- la pâte contient de préférence 82% de purée fraîche de pommes de terre, 10% de flocons ou de brisures de flocons de pommes de terre, et 8% d'amidon,
- les additifs sont constitués par exemple par des arômes, des émulsifiants, des colorants et/ou des protéines,
- on effectue, avant la friture, un séchage des morceaux de pâte à une température comprise entre 60° et 100°C pendant une durée comprise entre 10 et 30 minutes pour former une croûte de faible épaisseur sur les deux faces desdits morceaux,
- on perfore les morceaux de pâte avant la friture,

La présente invention a également pour objet un produit alimentaire croustillant obtenu par ce procédé, caractérisé en ce qu'il se présente sous la forme d'un corps creux de forme générale lenticulaire dont le taux de matière grasse est compris entre 20 et 30%.

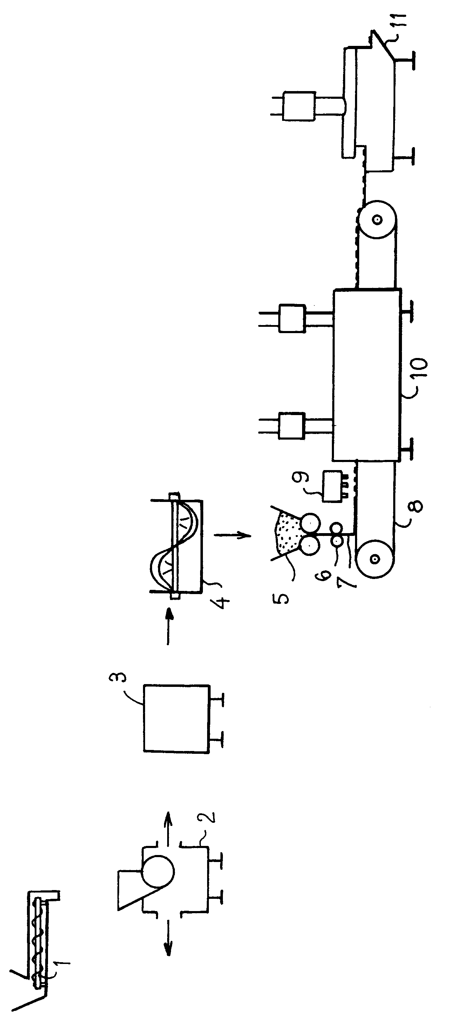

D'autres caractéristiques et avantages de l'invention apparaîtront à la lecture de la description qui va suivre donnée à titre d'exemple et faite en référence à la figure unique annexée qui représente une vue en élévation schématique d'une installation pour la mise en oeuvre du procédé selon l'invention.

En se reportant à la figure unique annexée, on voit que l'installation se compose tout d'abord d'un ensemble de préparation d'une purée fraîche non déshydratée de pommes de terre qui sert de produit de base aux produits obtenus par le procédé selon l'invention.

Cet ensemble comprend notamment un cuiseur 1 dans lequel les morceaux de pommes de terre préalablement lavés et épluchés sont cuits.

Les morceaux de pommes de terre cuits passent au travers d'un séparateur mécanique 2 de façon à enlever les points noirs, les peaux ou les débris ligneux et sont mélangés de façon classique dans une cuve 3 avec différents ingrédients pour obtenir une purée fraîche de pommes de terre.

Cette purée fraîche et propre a une température d'environ 80°C et est déversée dans un malaxeur 4 de type approprié, comme par exemple à ruban, planétaire ou continu, dans lequel ladite purée est mélangée, dans des proportions déterminées, avec des flocons ou des brisures de flocons de pommes de terre, de l'amidon sous forme de poudre ou de gel et des additifs tels que du sel soluble alimentaire.

Les proportions des différents constituants mélangés dans le malaxeur sont les suivantes :
- 80 à 85% de purée fraîche de pommes de terre, de préférence 82%,
- 10 à 15% de flocons ou de brisures de flocons de pommes de terre de préférence 10%,
- et 5 à 10% d'amidon, de préférence 8%.

D'autre part, les additifs sont constitués par exemple par des arômes, des émulsifiants, des colorants et/ou des protéines.

Les flocons ou les brisures de flocons mélangés à la purée ont pour but d'abaisser le taux d'humidité de cette purée et de contrôler la texture du produit fini, tandis que l'amidon joue le rôle de liant entre les différents constituants.

Une proportion variable de fécule de pommes de terre ainsi que de peaux broyées peut être ajoutée pour contrôler la texture ainsi que le goût du produit final.

A la sortie du malaxeur 4, on obtient ainsi une pâte dont le taux d'humidité résiduel est compris entre 60 et 70%.

Cette pâte est ensuite transférée dans une extrudeuse 5, par exemple du type à cylindres, qui permet d'améliorer la cohésion et l'homogénéité de la pâte, puis elle passe dans un laminoir 6, par exemple à cylindre lisse, pour former au moins une bande continue 7 d'épaisseur comprise entre 0,5 et 5 mm selon la texture désirée du produit final.

Cette bande 7 de pâte est disposée sur un tapis transporteur 8 et on forme, à partir de ladite bande par un dispositif approprié 9, des morceaux de formes géométriques quelconques par écrasement provoquant le soudage des bords desdits morceaux.

Ce dispositif peut être constitué par exemple par des outils tranchants ou par une guillotine qui forment les morceaux par découpage ou estampage de la bande de pâte.

Les chutes de la bande de pâte sont récupérées et recyclées dans l'extrudeuse 5.

Ensuite, les morceaux traversent un four 10 où ils sont séchés pour former une croûte de faible épaisseur sur les deux faces desdits morceaux.

La température et le temps de séchage sont fonction de la texture désirée du produit final et du taux de matière grasse désiré et sont de préférence compris entre 60° et 100° C et pendant 10 à 30 mn.

Ce séchage rapide a pour but de provoquer une évaporation superficielle de l'eau contenue dans la pâte.

Les morceaux ainsi séchés sont ensuite frits dans un bain d'huile à une température comprise entre 160 et 220°C et pendant une durée comprise entre 15 secondes et 1 minute pour obtenir des morceaux frits dont le taux d'humidité résiduel est inférieur à 2% et présentant un taux de matière grasse compris entre 20 et 30%.

Les morceaux obtenus se présentent sous la forme d'un corps creux de forme générale lenticulaire composé de deux membranes soudées à la périphérie et vide intérieurement.

En effet, lorsque les morceaux sont plongés dans le bain d'huile, il se produit une évaporation rapide de l'eau contenue dans la pâte entre les croûtes superficielles ce qui provoque un gonflement de ces morceaux.

Selon une variante, les morceaux de pâtes sont, avant séchage, perforés et striés sur l'une des faces et sont ensuite séchés dans le four 10 et plongés dans le bain d'huile 11 de façon à obtenir des produits plats comportant éventuellement sur l'une de leurs faces des stries et présentant un taux de matière grasse compris entre 20 et 30% et un taux d'humidité résiduel inférieur également à 2%.

Dans ce cas, le séchage n'est pas forcément nécessaire.

D'autre part, les perforations ou les stries peuvent être réalisées directement pendant ou après le laminage de la pâte et avant le découpage des morceaux.

Selon encore une autre variante, les morceaux peuvent être découpés dans les bandes de pâtes après le séchage.

Le procédé selon la présente invention permet d'obtenir des produits croustillants et dorés de qualité constante tout au long de l'année, ne présentant aucun défaut et de forme quelconque et de taille régulière ce qui facilite le conditionnement automatique.

De plus, le procédé selon la présente invention présente également l'avantage de revaloriser les sous produits comme les brisures de flocons de pommes de terre.

## Revendications

1. Procédé de préparation de morceaux croustillants reconstitués de pommes de terre, caractérisé en ce que :
- on prépare une pâte possédant un taux d'humidité résiduel compris entre 60 et 75% en mélangeant de la purée fraîche de pommes de terre dont la température est de l'ordre de 80°C et dans une proportion comprise entre 80 et 85%, des flocons ou des brisures de flocons de pommes de terre dans une proportion comprise entre 10 et 15%, de l'amidon dans une proportion comprise entre 5 et 10% et des additifs tels que du sel soluble alimentaire,
- on extrude la pâte obtenue pour améliorer son homogénéité,
- on lamine ladite pâte pour former au moins une bande continue d'épaisseur comprise entre 0,5 mm et 5 mm selon la texture désirée du produit final,
- on forme à partir de ladite bande de pâte des morceaux de formes géométriques quelconques par écrasement provoquant le soudage des bords desdits morceaux,
- on récupère et on recycle les chutes de ladite bande de pâte,
- et on effectue une friture des morceaux à une température comprise entre 160° et 220°C et pendant une durée comprise entre 15 secondes et 1 minute pour obtenir des morceaux frits dont le taux d'humidité résiduel est inférieur à 2%.

2. Procédé selon la revendication 1, caractérisé en ce que la pâte contient de préférence 82% de purée fraîche de pommes de terre, 10% de flocons ou de brisures de flocon de pommes de terre et 8% d'amidon.

3. Procédé selon la revendication 1, caractérisé en ce que les additifs sont constitués par des arômes, des émulsifiants, des colorants et/ou des protéines.

4. Procédé selon la revendication 1, caractérisé en ce que l'on effectue, avant la friture, un séchage des morceaux de pâte à une température comprise entre 60° et 100°C et pendant une durée comprise entre 10 et 30 mn pour former une croûte de faible épaisseur sur les deux faces desdits morceaux.

5. Procédé selon l'une quelconque des revendications précédentes, caractérisé en ce que l'on perfore les morceaux de pâte avant la friture.

6. Produit alimentaire croustillant à base de pommes de terre obtenu par le procédé selon l'une quelconque des revendications 1 à 4, caractérisé en ce qu'il se présente sous la forme d'un corps creux de forme générale lenticulaire dont le taux de matière grasse est compris entre 20 et 30%.

## Claims

1. Process for the preparation of crispy pieces reconstituted from potatoes, characterised in that:
- a paste is prepared which has a residual moisture content of between 60 and 75% by mixing fresh mashed potato in a proportion of between 80 and 85%, the temperature of which is of the order of 80°C, potato flakes or broken potato flakes in a proportion of between 10 and 15%, starch in a proportion of between 5 and 10% and additives such as soluble food salt,
- the paste obtained is extruded in order to improve its homogeneity,
- the said paste is laminated in order to form at least one continuous strip with a thickness of between 0.5 mm and 5 mm according to the desired texture of the final product,
- pieces of any geometrical shape are formed from the said strip of paste by crushing, causing the welding of the edges of the said pieces,
- the waste from the said strip of paste is recovered and recycled,
- and the pieces are fried at a temperature of between 160° and 220°C and for a period of time of between 15 seconds and 1 minute in order to obtain fried pieces whose residual moisture content is less than 2%.

2. Process according to Claim 1, characterised in that the paste preferably contains 82% of fresh mashed potato, 10% of potato flakes or broken potato flakes and 8% of starch.

3. Process according to Claim 1, characterised in that the additives are composed of flavouring agents, emulsifying agents, dyes and/or proteins.

4. Process according to Claim 1, characterised in that, before frying, the pieces of paste are dried at a temperature of between 60° and 100°C and for a period of time of between 10 and 30 min in order to form a thin crust on the two faces of the said pieces.

5. Process according to any one of the above claims, characterised in that the pieces of paste are perforated before frying.

6. Crispy foodstuff based on potatoes obtained by the process according to any one of Claims 1 to 4, characterised in that it is in the form of a hollow body of generally lenticular shape whose fat content is of between 20 and 30%.

## Patentansprüche

1. Verfahren zur Herstellung von aus Kartoffeln bestehenden knusprigen Stücken, dadurch gekennzeichnet, daß
- man eine Paste herstellt, die einen Restfeuchtegehalt zwischen 60 und 75% aufweist, indem man frisches Kartoffelpüree, dessen Temperatur in der Größenordnung von 80°C liegt, in einem Anteil zwischen 80 und 85%, Flocken oder Stückchen aus Kartoffeln in einem Anteil zwischen 10 und 15%, Stärke in einem Anteil zwischen 5 und 10% und Additive wie lösliches Lebensmittelsalz mischt,
- die erhltene Paste zur Verbesserung ihrer Homogenität extrudiert,
- die Paste zur Herstellung mindestens eines kontinuierlichen Streifens einer Dicke zwischen 0,5 mm und 5 mm je nach der gewünschten Textur des Endprodukts laminiert,
- aus dem Pastenstreifen Stücke in beliebigen geometrischen Formen formt durch Zerdrücken, das das Verschweißen der Ränder dieser Stücke bewirkt,
- die Abfälle des Pastenstreifens sammelt und recycliert,
- und die Stücke bei einer Temperatur zwischen 160° und 220°C und während einer Zeit wischen 15 Sekunden und 1 Minute fritiert zur Herstellung fritierter Stücke, deren Restfeuchtegehalt geringer ist als 2%.

2. Verfahren nach Anspruch 1, dadurch gekennzeichnet, daß die Paste bevorzugt 82% frisches Kartoffelpuree, 10% Kartoffelflocken oder -stückchen und 8% Stärke enthält.

3. Verfahren nach Anspruch 1, dadurch gekennzeichnet, daß die Additive aus Aromastoffen, Emulgatoren, Farbstoffen und/oder Proteinen bestehen.

4. Verfahren nach Anspruch 1, dadurch gekennzeichnet, daß man die Pastenstücke vor dem Fritieren bei einer Temperatur zwischen 60° und 100°C und während einer Zeit zwischen 10 und 30 Minuten trocknet, um eine dünne Kruste auf beiden Seiten der Stücke zu bilden.

5. Verfahren nach einem der vorstehenden Ansprüche, dadurch gekennzeichnet, daß man die Pastenstücke vor dem Fritieren perforiert.

6. Knuspriges Lebensmittelprodukt auf Kartoffelbasis, erhalten nach einem der Ansprüche 1 bis 4, dadurch gekennzeichnet, daß es in Form hohler Körper in Linsenform vorliegt, deren Fettgehalt zwischen 20 und 30% liegt.
